# EUROPEAN PATENT SPECIFICATION

(11) **EP 1 715 013 B1**
(45) Date of publication and mention of the grant of the patent: **17.02.2010**
(21) Application number: 06008228.6
(22) Date of filing: 20.04.2006
(51) Int. Cl.: C09J 7/02

(54) **Waterproof and airtight double-sided pressure-sensitive adhesive tape**
Wasser- und luftdichtes, doppelseitiges Haftklebeband
Feuille adhésive a double face sensible à la pression et étanche à l'eau et à l'air

(30) Priority: 20.04.2005 JP 2005122278
(43) Date of publication of application: 25.10.2006
(73) Proprietor: NITTO DENKO CORPORATION, Osaka (JP)
(72) Inventor: Ishikawa, Masayuki, Ibaraki-shi Osaka (JP); Yuumoto, Shouichi, Ibaraki-shi Osaka (JP); Inagaki, Sadayuki, Nakahara-cho Toyohashi-shi Aichi (JP)
(74) Representative: Grünecker, Kinkeldey, Stockmair & Schwanhäusser Anwaltssozietät

(56) References cited:
- EP-A1- 0 728 824
- DE-A1- 3 303 834
- US-B1- 6 521 309

## Description

### FIELD OF THE INVENTION

The present invention relates to a waterproof and airtight double-sided pressure-sensitive adhesive tape which is used for enhancing waterproof properties and airtightness of structures such as dwelling houses. In more detail, the invention relates to a waterproof and airtight double-sided pressure-sensitive adhesive tape which is suitably used for fixing a structure of dwelling house to a member or fixing members to each other (mainly for fixing portions where the tape is required to have elongation properties at the time of sticking, such as openings and shaped portions), or the like.

### BACKGROUND OF THE INVENTION

So far, in order to cope with the enforcement of regulations regarding promotion of quality of waterproof and airtight dwelling houses (dwelling houses having excellent waterproof properties and airtightness) and the energy saving following high airtightness and high heat insulation of dwelling houses, waterproof and airtight pressure-sensitive adhesive tapes have been used in gaps between a structure of dwelling house and a member or between members (mainly surroundings of sash openings or joints such as overlaps of moisture-permeable waterproof sheets) for the purpose of realizing waterproof properties and/or airtightness (see JP-A-2003-138227, JP-A-2003-41233 and JP-A-9-209464 (the term "JP-A" as used herein means an "unexamined published Japanese patent application")). Such waterproofing and airtight pressure-sensitive adhesive tapes are constructed such that a pressure-sensitive adhesive layer is coated on only one surface of a substrate. These conventional waterproof and airtight pressure-sensitive adhesive tapes can follow the movement of structures of dwelling houses or various members and exhibit waterproof properties and airtightness over a long period of time.

With respect to joint portions between a structure of dwelling house and a member or between members (mainly penetration portions of water feed/discharge pipes; openings such as windows and ventilation fans; three-plane crossing structures having three planes such as window sills; and in addition, shaped portions such as external angles, internal angles, and convexes), in application for waterproof, airtightness, fixing, etc., covering materials such as pressure-sensitive adhesive tapes, sheets (for example, moisture-permeable waterproof sheets and waterproof and moistureproof sheets), plate-like materials (for example, plywood boards, plastic plates, and metal plates), and three-dimensional processed articles having a prescribed shape corresponding to the shape of a portion to be applied (for example, plastic molding processed articles and metal-made processed articles) are generally combined therewith and used.

As pressure-sensitive adhesive tapes, pressure-sensitive adhesive tapes having a construction in which a pressure-sensitive adhesive layer is laminated on one surface or both surfaces of a substrate such as non-woven fabrics, woven fabrics, and plastic films (single-sided pressure-sensitive adhesive tapes or double-sided pressure-sensitive adhesive tapes) are used. In the case of application using a sheet such as moisture-permeable waterproof sheets and waterproof and moistureproof sheets, for example, after sticking a pressure-sensitive adhesive tape to a joint portion of welding between a frame of an opening and a sash frame, the sheet such as moisture-permeable waterproof sheets and waterproof and moistureproof sheets is used by covering a sticking site of the pressure-sensitive adhesive tape, and an unnecessary portion of the opening is cut out. Accordingly, the terminal portion of the sheet is positioned in the vicinity of the applied pressure-sensitive adhesive tape. On this occasion, since the sheet such as moisture-permeable waterproof sheets and waterproof and moistureproof sheets is fixed by takers or sprigs, it is free from peeling. However, since the sheet is partially fixed in a point-like state, a gap is likely formed between the sheet and the waterproof or airtight pressure-sensitive adhesive tape. Thus, when a strong wind or the like comes thereinto, there is some possibility that a lowering of the function due to peeling or the generation of a wind noise, etc. is caused. In order to prevent such a phenomenon from occurring, there are employed works, for example, sticking a pressure-sensitive adhesive tape or nailing a plate-like material in the terminal portion of the sheet. However, there is some possibility that an overlap of the pressure-sensitive adhesive tapes is formed so that not only the application becomes complicated, but also a lowering of waterproof properties and airtightness is caused. For that reason, depending upon the application method, there has been utilized an application method in which by using a double-sided pressure-sensitive adhesive tape as the pressure-sensitive adhesive tape, it is stuck on a welding part and a sheet such as moisture-permeable waterproof sheets and waterproof and moistureproof sheets is fixed on the other pressure-sensitive adhesive surface.

In consequence, in recent years, in application of penetration portions of water feed/discharge pipes, openings such as windows and ventilation fans, three-plane crossing structures having three planes such as window sills, and in addition, shaped portions such as external angles, internal angles, and convexes, there has been demanded an application method using a double-sided pressure-sensitive adhesive tape, which is easy in application and high in the reliability of waterproof properties and airtightness.

In application by covering an opening or a shaped portion by a covering material such as plate-like materials (for example, plywood boards, plastic plates, and metal plates) and three-dimensional processed articles having a prescribed shape corresponding to the shape of a portion to be applied (for example, plastic molding processed articles and metal-made processed articles) and fixing it to a structure or a member by using a single-sided pressure-sensitive adhesive tape having a pressure-sensitive adhesive layer formed on one surface of a substrate, thereby securing waterproof properties and airtightness such that leakage of water or ventilation does not reach a joint portion of welding between the structure and the member or between the members, by carrying out the application for the purposes of waterproofing and airtightness in the joint portion between the structure and the member or between the members by utilizing a pressure-sensitive adhesive tape, more satisfactory waterproof properties and airtightness can be obtained. Accordingly, there has been demanded an application using a waterproof and airtight pressure-sensitive adhesive tape (for example, single-sided pressure-sensitive adhesive tapes and double-sided pressure-sensitive adhesive tapes). In particular, in the application method which is required to fix a covering material such as plate-like materials and three-dimensional processed articles having a prescribed shape to a structure or a member, an application using a double-sided pressure-sensitive adhesive tape is desired.

As such a double-sided pressure-sensitive adhesive tape for the purposes of waterproofing and airtightness (waterproof and airtight double-sided pressure-sensitive adhesive tape), there are used waterproof and airtight double-sided pressure-sensitive adhesive tapes in which a pressure-sensitive adhesive layer is laminated on the both surfaces of a substrate (for example, non-woven fabrics, woven fabrics, and plastic films) as described previously, a release liner (separator) having been subjected to a release treatment (for example, a mold releasing treatment with a silicone-based releasing agent) on one surface or both surfaces of paper (for example, glassine paper and kraft paper) or a plastic film is laminated on the surface of at least one of the pressure-sensitive adhesive layers present on the both surfaces of the substrate and the laminate is wound. Also, as an application method using a waterproof and airtight double-sided pressure-sensitive adhesive tape, a method in which a wound waterproof and airtight double-sided pressure-sensitive adhesive tape is rewound and cut into a length with a necessary amount; as the need arises, after peeling away one of separators, the resulting tape is stuck to a joint portion of welding by utilizing the exposed surface of the pressure-sensitive adhesive layer; and a covering material (for example, sheets, plate-like materials, and three-dimensional processed articles having a prescribed shape) is fixed on the surface of the pressure-sensitive adhesive layer as newly exposed by peeling away a separator after sticking is general.

Conventional waterproof and airtight double-sided pressure-sensitive adhesive tapes are used in a joint portion (for example, a welding part between a sash frame of an opening and a window frame and a welding part between a floor plane and a wall plane), and in almost all cases, they are used in a planar portion wherein elongation or flexibility of the waterproof and airtight double-sided pressure-sensitive adhesive tape is not required, such as a horizontal plane, a vertical plane, and a right-angled portion of members (crossing portion between a horizontal plane and a vertical plane). Accordingly, in almost all cases, the conventional waterproof and airtight double-sided pressure-sensitive adhesive tapes usually have an elongation rate at break of from 20 to 70 %. Also, even if the elongation rate is high, in almost all cases, the substrate has a thick thickness and a high strength so that the tape fails in flexibility.

However, in sticking a double-sided pressure-sensitive adhesive tape in a joint portion in a welding part between a structure and a member or between members, such as penetration portions of water feed/discharge pipes, openings (for example, windows and ventilation fans), and shaped portions (for example, external angles, internal angles, and convexes), the plane of a sticking site for sticking a double-sided pressure-sensitive adhesive tape becomes two or three planes. Also, the double-sided pressure-sensitive adhesive tape is required to have elongation and flexibility or fitness such that it follows the plane of a structure or member (for example, a characteristic such that the double-sided pressure-sensitive adhesive tape is able to be developed in a fan shape).

For this reason, the conventional waterproof and airtight double-sided pressure-sensitive adhesive tapes have a low elongation rate and a high stress at the time of elongation and are hardly applied. Even though the application could be achieved, peeling or wrinkle is generated in the sticking portion of the waterproof and airtight double-sided pressure-sensitive adhesive tape. For that reason, a gap or a void or a portion where the waterproof and airtight double-sided pressure-sensitive adhesive tape is peeled away is generated between the structure or the member and the waterproof and airtight double-sided pressure-sensitive adhesive tape, and a problem that the waterproof properties and airtightness cannot be kept is caused.

In addition, even in a double-sided pressure-sensitive adhesive tape of a wound construction in which a pressure-sensitive adhesive layer is formed on the both sides of a rubber-made sheet having elongation properties and a separator having been subjected to a release treatment is used on the both surfaces of paper (for example, glassine paper and kraft paper) or the like, an elongation rate of the paper (for example, glassine paper and kraft paper) is very low as several % so that likewise the use method of a usual double-sided pressure-sensitive adhesive tape, it is impossible to stick the double-sided pressure-sensitive adhesive tape to a joint portion of welding by elongation in a state that a separator is laminated on one of the pressure-sensitive adhesive surfaces. For this reason, it is necessary to achieve the application by once peeling away the separators on the both sides and the application is inevitably carried out while touching the surfaces of the pressure-sensitive adhesive layers on the both surfaces by fingers so that the pressure-sensitive adhesive adheres to the fingers. Thus, after the application, there is some possibility that the fingers cannot be separated from the double-sided pressure-sensitive adhesive tape, or that when the fingers are separated by force, the double-sided pressure-sensitive adhesive tape is elongated or broken, whereby the application becomes very difficult.

In order to solve these problems, there is a method for achieving the application by partially putting a separator on the pressure-sensitive adhesive surface. However, it is a rare case that a covering material such as sheets, plate-like materials, and three-dimensional processed articles having a prescribed shape is fixed immediately after the application. In a long case, there may be a possibility for allowing it to stand for about one day after the application. As a result, the portion on which a separator is not put and where the pressure-sensitive adhesive surface is exposed is exposed to the wet or attached with dust or a foreign substance, leading to a problem such as a lowering of tackiness.

In addition, in the case of achieving the application in penetration portions of water feed/discharge pipes, a bottom frame of an opening and rising portions of the both ends, and the like, there may be the case where the application is rather easy when the application is achieved by bending the waterproof and airtight double-sided pressure-sensitive adhesive tape. However, in the waterproof and airtight double-sided pressure-sensitive adhesive tape, the pressure-sensitive adhesive surface is formed on the both surfaces. Accordingly, in the case where a separator is not provided, the pressure-sensitive adhesive surfaces are stuck to each other during bending so that it becomes impossible to achieve the application.

### SUMMARY OF THE INVENTION

Accordingly, an object of the invention is to provide a waterproof and airtight double-sided pressure-sensitive adhesive tape which even in the case of sticking to a site having a curved shape or a three-dimensional shape, is easy with respect to sticking application works, is able to fix a covering material thereonto after the application and is able to exhibit excellent waterproof properties and airtightness.

Another object of the invention is to provide a waterproof and airtight double-sided pressure-sensitive adhesive tape useful as a double-sided pressure-sensitive adhesive tape, which is used for fixing a structure of dwelling house to a member or fixing members to each other and is able to prevent penetration of storm sewage into the inside of a dwelling house and to prevent dew condensation or corrosion in the inside of dwelling house over a long period of time.

In order to attain the foregoing objects, the present inventors made extensive and intensive investigations. As a result, it has been found that not only by forming a pressure-sensitive adhesive layer on the both surfaces of a rubber-made sheet as a substrate and protecting the surface of the pressure-sensitive adhesive layer formed on at least one surface of the rubber-made sheet by a specific release liner, even in a state that the release liner is superimposed on one of the pressure-sensitive adhesive layers, a double-sided pressure-sensitive adhesive tape can be elongated and used in a state that the release liner is integrated with the double-sided pressure-sensitive adhesive tape so that even in the case of sticking to a site having a curved shape or a three-dimensional shape, bending and sticking, or elongation and sticking can be achieved so that sticking application works are easy, but also after the application, by exposing the pressure-sensitive adhesive surface from which the release liner has been peeled away, various covering materials can be fixed. Accordingly, it has been found that it is possible to obtain a double-sided pressure-sensitive adhesive tape in which even in the case of sticking to a site having a curved shape or a three-dimensional shape, its application workability during sticking is good and which after the application, is able to fix a covering material such as sheets, plate-like materials, and three-dimensional processed articles having a prescribed shape and to exhibit excellent waterproof properties and airtightness over a long period of time. The invention has been accomplished on the basis of such knowledge.

Specifically, the invention is concerned with a waterproof and airtight double-sided pressure-sensitive adhesive tape comprising a substrate and a pressure-sensitive adhesive layer on the both surfaces thereof, wherein the substrate is a rubber-made sheet; and the surface of at least one of the pressure-sensitive adhesive layers is protected by a release liner having elongation properties, wherein the rubber-made sheet as the substrate has an elongation at the time of breakage (distance between two gage marks: 40 mm, drawing rate: 300 mm/min) of from 200 to 1,200 % in both the longitudinal direction and the cross direction and a stress under 100 % elongation (distance between two gage marks: 40 mm, drawing rate: 50 mm/min) of from 10 to 100 N/cm² in both the longitudinal direction and the cross direction, and the release liner having elongation properties has an elongation at the time of breakage (distance between two gage marks: 40 mm, drawing rate: 300 mm/min) of from 150 to 1,200 % in both the longitudinal direction and the cross direction.

The release liner having elongation properties is suitably a release liner made of a film-like material having release properties against the pressure-sensitive adhesive layer and elongation properties or a release liner having a construction in which a release treatment coating film layer or a coating film layer having non-self adhesive properties is formed on at least one surface of a substrate having elongation properties. The release treatment coating film layer can be formed of a silicone-based release treating agent. Also, the coating film layer having non-self adhesive properties can be formed of a coating film-forming composition containing an acrylic polymer or a long chain alkyl-based compound.

Also, the rubber-made sheet may be constructed of a rubber composition containing a synthetic rubber as the major component. As the synthetic rubber, at least one synthetic rubber selected from a butyl rubber, an ethylene-propylene rubber and an ethylene-propylene-diene rubber can be suitably used.

### BRIEF DESCRIPTION OF THE DRAWINGS

Figs. 1A and 1B each is a schematic cross-sectional view to show a part of an example of the waterproof and airtight double-sided pressure-sensitive adhesive tape of the invention.
Fig. 2 is a schematic view to show a method of subjecting a double-sided pressure-sensitive adhesive tape to sticking to the circumference of a shaped portion by a method of evaluating sticking application properties in the Examples. Description of Reference Numerals and Sings:
   1a: Waterproof and airtight double-sided pressure-sensitive adhesive tape
   1b: Waterproof and airtight double-sided pressure-sensitive adhesive tape
2: Rubber-made sheet
3a: Pressure-sensitive adhesive layer
3b: Pressure-sensitive adhesive layer
4a: Release liner having a release function on only one surface thereof and having elongation properties
4b: Release liner having a release function on the both surfaces thereof and having elongation properties
5: Release liner not having elongation properties
6: Body (plywood board)
7: Water feed/discharge pipe
8: Double-sided pressure-sensitive adhesive tape

### DETAILED DESCRIPTION OF THE INVENTION

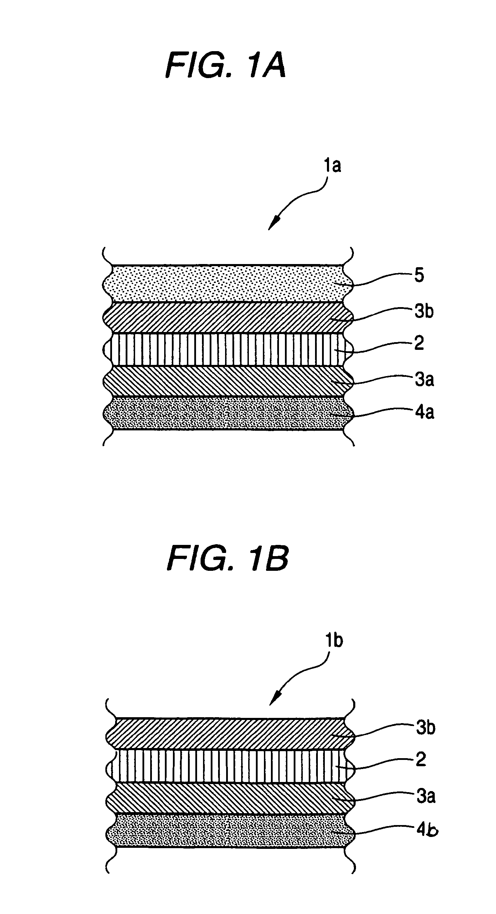

As illustrated in Figs. 1A and 1B, the waterproof and airtight double-sided pressure-sensitive adhesive tape of the invention has a construction in which a rubber-made sheet is used as a substrate; a pressure-sensitive adhesive layer is formed on the both surfaces of the rubber-made sheet; and a release liner having elongation properties (hereinafter sometimes referred to as "elongating release liner") is laminated on the surface of at least one of the pressure-sensitive adhesive layers. Figs. 1A and 1B each is a schematic cross-sectional view to partially show an example of the waterproof and airtight double-sided pressure-sensitive adhesive tape of the invention, in which Fig. 1A shows an example of a waterproof and airtight double-sided pressure-sensitive adhesive tape using an elongating release liner having a release function on only one surface thereof; and Fig. 1B shows an example of a waterproof and airtight double-sided pressure-sensitive adhesive tape using an elongating release liner having a release function on the both surfaces thereof. In Figs. 1A and 1B, 1a and 1b each denotes a waterproof and airtight double-sided pressure-sensitive adhesive tape; 2 denotes a rubber-made sheet; 3a and 3b each denotes a pressure-sensitive adhesive layer; 4a denotes a release liner having a release function on only one surface thereof and having elongation properties (hereinafter sometimes referred to as "elongating release liner of single-sided release surface type"); 4b denotes a release liner having a release function on the both surfaces thereof and having elongation properties (hereinafter sometimes referred to as "elongating release liner of double-sided release surface type"); and 5 denotes a release liner not having elongation properties (hereinafter sometimes referred to as "non-elongating release liner"). The waterproof and airtight double-sided pressure-sensitive adhesive tape 1a as illustrated in Fig. 1A has a construction
in which the pressure-sensitive adhesive layer 3a is formed on one surface of the rubber-made sheet 2 and the pressure-sensitive adhesive layer 3b is formed on the other surface and has a construction in which the surface of the pressure-sensitive adhesive layer 3a is protected by the elongating release liner 4a of single-sided release surface type and the surface of the pressure-sensitive adhesive layer 3b is protected by the non-elongating release liner 5. The waterproof and airtight double-sided pressure-sensitive adhesive tape 1b as illustrated in Fig. 1B has a construction in which the pressure-sensitive adhesive layer 3a is formed on one surface of the rubber-made sheet 2 and the pressure-sensitive adhesive layer 3b is formed on the other surface and has a construction in which the surface of the pressure-sensitive adhesive layer 3a is protected by the elongating release liner 4b of double-sided release surface type. Incidentally, in the waterproof and airtight double-sided pressure-sensitive adhesive tape 1b, the pressure-sensitive adhesive layer 3b can be protected by winding in a rolled form in a state that the surface of the pressure-sensitive adhesive layer 3b comes into contact with the surface of the elongating release liner 4b of double-sided release surface type.

### (Elongating release liner)

It is important that the elongating release liner has elongation properties and that at least one surface thereof is a surface having release properties against the pressure-sensitive adhesive layer. It is preferable that the elongating release liner has elongation properties such that it can follow the elongation of the waterproof and airtight double-sided pressure-sensitive adhesive tape because it must be elongated together with the waterproof and airtight double-sided pressure-sensitive adhesive tape. Accordingly, the elongating release liner has an elongation at the time of breakage (distance between two gage marks: 40 mm, drawing rate: 300 mm/min) of from 150 to 1,200 % (preferably from 250 to 1,200 %, and more preferably from 500 to 1,200 %) in both the longitudinal direction and the cross direction. When the elongation at the time of breakage of the elongating release liner is too low, the elongating release liner is inferior in elongation properties so that there is some possibility that it cannot follow the elongation of the waterproof and airtight double-sided pressure-sensitive adhesive tape.

Incidentally, in the invention, the elongation at the time of breakage of the elongating release liner is defined as a value which is measured by a method as described later.

As such an elongating release liner, a release liner made of a film-like material having release properties against the pressure-sensitive adhesive layer and elongation properties (hereinafter sometimes referred to as "elongating film type release liners") and a release liner having a construction in which a release treatment coating film layer or a coating film layer having non-self adhesive properties is formed on at least one surface of a substrate having elongation properties (hereinafter sometimes referred to as "elongating substrate-containing release liner") can be suitably used.

In the elongating release liner, as the elongating film type release liner, thermoplastic resin-made films having release properties against the pressure-sensitive adhesive layer and elongation properties can be suitably used. As a thermoplastic resin which constructs the elongating film type release liner, there can be suitably used polyolefin-based resins such as polyethylene (for example, low density polyethylene, medium density polyethylene, high density polyethylene, linear low density polyethylene, and ultra-low density polyethylene), polypropylene, copolymers of ethylene and propylene (ethylene-propylene copolymers), copolymers of ethylene or propylene and other α-olefin (for example, butene-1, pentene-1, hexene-1, and 4-methylpentene-1), and copolymers of ethylene and other ethylenically unsaturated monomer (for example, vinyl acetate, acrylic acid, acrylic esters, methacrylic acid, methacrylic esters, and vinyl alcohol). As the thermoplastic resin, other thermoplastic resins can also be used so far as they have release properties against the pressure-sensitive adhesive layer and elongation properties. The thermoplastic resin can be used singly or in combination of two or more kinds thereof. Incidentally, in the case where the thermoplastic resin is a copolymer, all random copolymers and block copolymers are employable.

As the olefin-based resin, polyethylene, polypropylene, and ethylene-propylene copolymers are preferable. Above all, polyethylene and a mixture of polyethylene and polypropylene (especially polyethylene) can be suitably used.

When the elongating film type release liner is formed of a polyolefin-based resin such as polyethylene and a mixture of polyethylene and polypropylene, not only it has release properties against the pressure-sensitive adhesive layer and elongation properties, but also it is able to be formed in a thin film-like form having a thin thickness and to be controlled with respect to a stress at the time of elongation (for example, a residual stress) in a low level.

For example, the elongating film type release liner can be produced while utilizing a known film forming method such as a film forming method using an extruder or a calender roll (especially, a T-type extruder). For example, in the case where the elongating film type release liner is formed of a polyolefin-based resin such as polyethylene and a mixture of polyethylene and polypropylene, the elongating film type release liner can be produced by extrusion molding at a molding temperature of from 200 to 250°C.

The elongating film type release liner may contain a lubricant, a pigment, a filler, and other additives as the need arises.

Incidentally, in such an elongating film type release liner, a release treatment coating film layer or a coating film layer having non-self adhesive properties as described below may be formed on the surface in the side coming into contact with the pressure-sensitive adhesive layer.

The thickness of the elongating film type release liner is not particularly limited and can be properly chosen within the range of, for example, from 0.005 to 0.5 mm. The thickness is preferably from 0.02 to 0.100 mm (more preferably from 0.025 to 0.06 mm). When the thickness of the elongating film type release liner is too thick, in elongating the waterproof and airtight double-sided pressure-sensitive adhesive tape, a necessary stress becomes high so that the application properties are lowered. On the other hand, when it is too thin, the strength is lowered so that the waterproof and airtight double-sided pressure-sensitive adhesive tape is liable to be damaged and may be possibly cracked due to the elongation at the time of application.

Incidentally, in the invention, the thickness such as the thickness of the elongating film type release liner is measured by using a dial gauge (scale: 0.01 mm) as defined in JIS Z0237.

In the elongating release liner, the elongating substrate-containing release liner has a construction in which a release treatment coating film layer or a coating film layer having non-self adhesive properties is formed on one surface or both surfaces of a substrate having elongation properties (hereinafter sometimes referred to as "elongating substrate for release liner"). In the elongating substrate-containing release liner, the surface in the side in which the release treatment coating film layer or the coating film layer having non-self adhesive properties is formed can be utilized as a surface in the side coming into contact with the pressure-sensitive adhesive layer.

The elongating substrate for release liner is not particularly limited so far as it is a substrate having elongation properties, and rubber-made sheets and knitted woven fabrics can be suitably used. Incidentally, as the elongating substrate for release liner, the thermoplastic resin-made films in the elongating film type release liner (the thermoplastic resin-made films having release properties against the pressure-sensitive adhesive layer and elongation properties) can also be used. As the rubber-made sheet in the elongating substrate for release liner, rubber-made sheets the same as the rubber-made sheet as the substrate in the waterproof and airtight double-sided pressure-sensitive adhesive tape (preferably a butyl rubber, an ethylene-propylene rubber, and an ethylene-propylene-diene rubber, and more preferably a butyl rubber) can be used. Incidentally, rubber-made sheets made of an unvulcanized rubber are suitable as the rubber-made sheet in the elongating substrate for release liner.

The thickness of the rubber-made sheet in the elongating substrate for release liner is not particularly limited and can be properly chosen within the range of, for example, 0.1 mm or more (for example, from 0.1 to 3.0 mm). The thickness is preferably from 0.4 to 2.0 mm (more preferably from 0.5 to 1.5 mm).

The knitted woven fabric in the elongating substrate for release liner is not particularly limited so far as it is a knitted woven fabric having elongation properties. Fibers of the knitted woven fabric are not particularly limited, and all chemical fibers and natural fibers (for example, silk, wool, and cotton) are employable. Of these, chemical fibers can be suitably used from the viewpoint of waterproof properties or durability. The chemical fiber is not particularly limited, and examples thereof include polyester-based fibers, poly-amide-based fibers [for example, aliphatic polyamide fibers and aromatic polyamide fibers (so-called aramid fibers)], polyacrylonitrile-based fibers, acrylic fibers, polyvinyl alcohol fibers (so-called vinylon fibers), polyethylene-based fibers, polyimide-based fibers, and fluorine-based resin fibers. As the chemical fiber, polyester-based fibers and polyamide-based fibers are suitable. The fibers can be used singly or in combination of two or more kinds thereof.

Incidentally, adequate additives such as a colorant, an ultraviolet absorber, an antioxidant, and an antistatic agent may be blended in proper amounts in the fiber.

The knitted woven fabric is not particularly limited with respect to the weaving structure so far as it has a knitted woven structure. A hosiery plain cloth (plain cloth or woven fabric having a hosiery woven structure) is especially suitable from the viewpoint of stretchability.

The knitted woven fabric can be prepared while utilizing a known preparation method (for example, a hand knitting method in a knitted state and a mechanical knitting method in a knitted state).

Though a basis weight of the knitted woven fabric is not particularly limited, it is preferably 30 g/m² or more, and especially preferably from 50 to 100 g/m². Though the thickness of the knitted woven fabric is not particularly limited, it is preferably from 0.1 to 0.4 mm, and especially preferably from 0.15 to 0.3 mm.

In the elongating substrate-containing release liner, the release treatment coating film layer is a layer constructed of a release treating agent (release treating agent layer). The release treating agent which constructs the release treatment coating film layer is not particularly limited and can be properly chosen and used among known release treating agents. Specific examples of the release treating agent include silicone-based release treating agents, fluorine-based release treating agents, and long chain alkyl-based release treating agents. The release treating agent can be used singly or in combination of two or more kinds thereof. As the release treating agent, silicone-based release treating agents can be suitably used.

In the elongating substrate-containing release liner, the coating film layer having non-self adhesive properties (hereinafter sometimes referred to as "non-self adhesive coating film layer") is a layer which is constructed of a coating film-forming composition and which has non-self adhesive properties. The coating film-forming composition (raw material or material) which constructs the non-self adhesive coating film layer is not particularly limited so far as it is able to cover the surface of the elongating substrate for release liner and to exhibit non-self adhesive properties. For example, the non-self adhesive coating film layer can be formed of a coating film-forming composition containing an acrylic polymer or a long chain alkyl-based compound, a coating film-forming composition containing a component which is used for the preparation of an acrylic polymer or a long chain alkyl-based compound (for example, a monomer component), or the like. The coating film-forming composition which forms the non-self adhesive coating film layer can be used singly or in combination of two or more kinds thereof.

As the acrylic polymer, (meth) acrylic alkyl ester-based polymers containing at least a (meth)acrylic alkyl ester as a monomer component are suitable. Specific examples of the (meth) acrylic alkyl ester include (meth) acrylic C₁₋₂₀-alkyl esters such as methyl (meth)acrylate, ethyl (meth)acrylate, propyl (meth) acrylate, isopropyl (meth) acrylate, n-butyl (meth) acrylate, isobutyl (meth) acrylate, s-butyl (meth)-acrylate, t-butyl (meth)acrylate, pentyl (meth)acrylate, hexyl (meth) acrylate, heptyl (meth) acrylate, octyl (meth)-acrylate, 2-ethylhexyl (meth)acrylate, isooctyl (meth)-acrylate, nonyl (meth)acrylate, isononyl (meth) acrylate, decyl (meth)acrylate, isodecyl (meth)acrylate, undecyl (meth) acrylate, dodecyl (meth)acrylate, tridecyl (meth)-acrylate, tetradecyl (meth)acrylate, pentadecyl (meth)-acrylate, hexadecyl (meth)acrylate, heptadecyl (meth)-acrylate, octadecyl (meth)acrylate, nonadecyl (meth)acrylate, and eicosyl (meth) acrylate. The (meth) acrylic alkyl ester as the monomer component can be used singly or in combination of two or more kinds thereof.

In the acrylic polymer, a monomer component which is copolymerizable with the (meth)acrylic alkyl ester (copolymerizable monomer component) may be used together with the (meth) acrylic alkyl ester. Examples of such a copolymerizable monomer component include carboxyl group-containing monomers such as (meth) acrylic acid (acrylic acid and methacrylic acid), itaconic acid, maleic acid, fumaric acid, crotonic acid, and isocrotonic acid or anhydrides thereof (for example, maleic anhydride and itaconic anhydride); maleic acid (mono- or di-) esters such as monomethyl maleate, monoethyl maleate, and diethyl maleate; fumaric acid (mono- or di-)esters such as monomethyl fumarate and monoethyl fumarate; aromatic vinyl compounds such as styrene and substituted styrenes; hydroxyl group-containing monomers such as (meth)acrylic hydroxyalkyls (for example, hydroxyethyl (meth) acrylate and hydroxypropyl (meth)acrylate) and glycerin dimethacrylate; epoxy group-containing monomers such as glycidyl (meth) acrylate and methylglycidyl (meth)acrylate; cyano group-containing monomers such as acrylonitrile and methacrylonitrile; amide group-containing monomers such as acrylamide, methacrylamide, N-vinylpyrrolidone, and N, N-dimethyl (meth) acrylamide; amino group-containing monomers such as aminoethyl (meth)acrylate and (meth)acryloyl morpholine; imide group-containing monomers such as cyclohexyl maleimide and isopropyl maleimide; vinyl esters such as vinyl acetate; vinyl alcohols such as vinyl alcohol; vinyl ethers such as vinyl alkyl ethers; vinyl chloride; olefins such as ethylene and propylene; dienes such as butadiene, isoprene, and isobutylene; and sulfonic acid group-containing monomers such as sodium vinylsulfonate. The copolymerizable monomer component can be used singly or in combination of two or more kinds thereof.

Specifically, polybutyl methacrylate and an octadecyl methacrylate-acrylonitrile copolymer are suitable as the acrylic polymer.

On the other hand, the long chain alkyl-based compound is not particularly limited. For example, reaction products between polyvinyl alcohol and a long chain alkyl isocyanate having from 10 to 20 carbon atoms such as stearyl isocyanate can be used.

In general, a material which is used as a releasing agent (release treating agent) is included in the materials which are used in the non-self adhesive coating film layer.

In the non-self adhesive coating film layer, besides the acrylic polymer or long chain alkyl-based compound or the component for preparing an acrylic polymer or a long chain alkyl-based compound (for example, a monomer component), adequate additives such as a filler, a colorant, an ultraviolet absorber, an antioxidant, and an antistatic agent may be blended in proper amounts in the coating film-forming composition.

A method for forming the release treatment coating film layer or non-self adhesive coating film layer which is formed on the elongating substrate for release liner is not particularly limited. For example, the release treatment coating film layer or non-self adhesive coating film layer can be formed by coating a release treating agent or a coating film-forming composition on a prescribed surface of an elongating substrate for release liner, followed by drying or curing as the need arises. Incidentally, the release treating agent or coating film-forming composition may have a liquid state or a molten state. For example, in the case where the coating film-forming composition has a liquid state or a molten state or in the case where the coating film-forming composition contains a monomer component for preparing an acrylic polymer, by coating and then drying or curing by a heating treatment or the like, it is possible to form the non-self adhesive coating film layer.

Incidentally, the thickness of the release treatment coating film layer or non-self adhesive coating film layer which is formed on the elongating substrate for release liner is not particularly limited and can be properly set up.

### (Substrate)

The substrate in the waterproof and airtight double-sided pressure-sensitive adhesive tape is formed of a rubber-made sheet. A raw material or a material of the rubber-made sheet is not particularly limited, and various kinds of rubber compositions (for example, rubber compositions containing a synthetic rubber or a natural rubber) can be used. It is preferable that the rubber-made sheet is constructed of a rubber composition containing a synthetic rubber as the major component. Such a synthetic rubber is not particularly limited, and examples thereof include a butyl rubber, a polyisoprene rubber, a polyisobutylene rubber, a chloroprene rubber, a nitrile butyl rubber, an ethylene-propylene rubber (EPT), an ethylene-propylene-diene rubber (EPDM), a polybutene rubber, a chlorinated polyethylene rubber, a styrene-butadiene (SB) rubber, a styrene-isoprene (SI) rubber, a styrene-isoprene-styrene block copolymer (SIS) rubber, a styrene-butadiene-styrene block copolymer (SBS) rubber, a styrene-ethylene-butylene-styrene block copolymer (SEBS) rubber, a styrene-ethylene-propylene-styrene block copolymer (SEPS) rubber, and a styrene-ethylene-propylene block copolymer (SEP) rubber. The synthetic rubber can be used singly or in combination of two or more kinds thereof.

A butyl rubber, an ethylene-propylene rubber, and an ethylene-propylene-diene rubber can be suitably used as the synthetic rubber. Of these, a butyl rubber is especially preferable.

Besides the rubber component (for example, a synthetic rubber), adequate additives such as a softener, a filler, a colorant, an ultraviolet absorber, an antioxidant, and an antistatic agent may be blended in proper amounts in the rubber composition.

The rubber-made sheet can be prepared by utilizing a known forming method (for example, an extrusion molding method and a calender molding method).

Incidentally, rubber-made sheets made of an unvulcanized rubber are suitable as the rubber-made sheet.

The thickness of the rubber-made sheet as the substrate is not particularly limited and can be properly chosen within the range of, for example, 0.1 mm or more (for example, from 0.1 to 3.0 mm). The thickness is preferably from 0.4 to 2.0 mm (more preferably from 0.5 to 1.5 mm) . When the thickness of the rubber-made sheet is too thin, the double-sided pressure-sensitive adhesive tape becomes weak against a shock, whereas when it is too thick, a force necessary for elongating the pressure-sensitive adhesive tape becomes large.

From the viewpoint of elongation properties of the waterproof and airtight double-sided pressure-sensitive adhesive tape, it is preferable that the rubber-made sheet as the substrate has characteristics such that its elongation at the time of breakage (distance between two gage marks: 40 mm, drawing rate: 300 mm/min) is from 200 to 1,200 % in both the longitudinal direction and the cross direction and that its stress under 100 % elongation (distance between two gage marks: 40 mm, drawing rate: 50 mm/min) is from 10 to 100 N/cm² in both the longitudinal direction and the cross direction.

In the rubber-made sheet, the elongation at the time of breakage (distance between two gage marks: 40 mm, drawing rate: 300 mm/min; hereinafter sometimes referred to as "elongation at break") is not particularly limited so far as it is from 200 to 1,200 % in both the longitudinal direction (lengthwise direction or machine direction; so-called "MD direction") and the cross direction (transverse direction; so-called "TD direction"). The elongation at break is preferably from 300 to 1,200 % (more preferably from 500 to 1,200 %). Incidentally, when the elongation at break of the rubber-made sheet is less than 200 % in at least one direction of the MD direction and the TD direction, the elongation properties are lowered in sticking the waterproof and airtight double-sided pressure-sensitive adhesive tape, whereas when it exceeds 1,200 %, cutting is liable to occur in elongating and sticking the waterproof and airtight double-sided pressure-sensitive adhesive tape.

Incidentally, such an elongation at break may be identical or different in both the MD direction and the TD direction. In many cases, the elongation at break in the TD direction is larger than that in the MD direction. For example, the elongation at break in the MD direction may be from 200 to 1,000 % (preferably from 300 to 900 %, and more preferably from 500 to 800 %), whereas the elongation at break in the TD direction may be from 300 to 1,200 % (preferably from 500 to 1,200 %, and more preferably from 700 to 1,200 %).

In the rubber-made sheet, the stress under 100 % elongation (distance between two gage marks: 40 mm, drawing rate: 50 mm/min; hereinafter sometimes referred to as "100 % tensile deforming stress") is not particularly limited so far as it is from 10 to 100 N/cm² in both the longitudinal direction (lengthwise direction or machine direction; so-called "MD direction") and the cross direction (transverse direction; so-called "TD direction"). The 100 % tensile deforming stress is preferably from 10 to 80 N/cm² (more preferably from 10 to 70 N/cm²). Incidentally, when the 100 % tensile deforming stress of the rubber-made sheet is less than 10 N/cm² in at least one direction of the MD direction and the TD direction, the adhesiveness is lowered in sticking the waterproof and airtight double-sided pressure-sensitive adhesive tape, whereas when it exceeds 100 N/cm², after elongating and sticking the waterproof and airtight double-sided pressure-sensitive adhesive tape, the generation of wrinkle, cutting, peeling, etc. is liable to occur due to the deforming stress.

Incidentally, such a 100 % tensile deforming stress may be identical or different in both the MD direction and the TD direction. In many cases, the 100 % tensile deforming stress in the MD direction is larger than that in the TD direction. For example, the 100 % tensile deforming stress in the MD direction may be from 12 to 100 N/cm² (preferably from 15 to 80 N/cm², and more preferably from 20 to 70 N/cm²), whereas the 100 % tensile deforming stress in the TD direction may be from 10 to 80 N/cm² (preferably from 10 to 50 N/cm², and more preferably from 10 to 30 N/cm²).

### (Pressure-sensitive adhesive layer)

In the waterproof and airtight double-sided pressure-sensitive adhesive tape of the invention, a pressure-sensitive adhesive layer is formed on the both surfaces of a substrate made of a rubber-made sheet. A pressure-sensitive adhesive which constructs such a pressure-sensitive adhesive layer is not particularly limited. For example, known pressure-sensitive adhesives such as rubber-based pressure-sensitive adhesives, acrylic pressure-sensitive adhesives, polyester-based pressure-sensitive adhesives, urethane-based pressure-sensitive adhesives, polyamide-based pressure-sensitive adhesives, epoxy-based pressure-sensitive adhesives, vinyl alkyl ether-based pressure-sensitive adhesives, silicone-based pressure-sensitive adhesives, and fluorine-based pressure-sensitive adhesives can be used. The pressure-sensitive adhesive may also be a hot melt type pressure-sensitive adhesive. The pressure-sensitive adhesive can be used singly or in combination of two or more kinds thereof. The pressure-sensitive adhesive may also be a pressure-sensitive adhesive in any form including an emulsion-based pressure-sensitive adhesive, a solvent-based pressure-sensitive adhesive, an oligomer-based pressure-sensitive adhesive, and a solid-based pressure-sensitive adhesive.

The respective pressure-sensitive adhesive layers formed on the both surfaces of the substrate may be formed of the same pressure-sensitive adhesive or may be formed of a different pressure-sensitive adhesive from each other.

Incidentally, the pressure-sensitive adhesive may contain proper additives such as a crosslinking agent (for example, a polyisocyanate-based crosslinking agent and an alkyl etherified melamine compound-based crosslinking agent), a tackifier (for example, a rosin derivative resin, a polyterpene resin, a petroleum resin, and a phenol resin), a plasticizer, a filler, and an anti-aging agent in addition to the polymer component such as the pressure-sensitive adhesive component (base polymer) depending upon the kind of the pressure-sensitive adhesive, etc.

A rubber-based pressure-sensitive adhesive is suitable as the pressure-sensitive adhesive. For example, the rubber-based pressure-sensitive adhesive may be any of a natural rubber-based pressure-sensitive adhesive containing a natural rubber as the base polymer or a synthetic rubber-based pressure-sensitive adhesive containing a synthetic rubber as the base polymer. Of these, a synthetic rubber-based pressure-sensitive adhesive is preferable. Examples of a synthetic rubber in such a synthetic rubber-based pressure-sensitive adhesive include a butyl rubber, a polyisoprene rubber, a polyisobutylene rubber, a styrene-butadiene (SB) rubber, a styrene-isoprene (SI) rubber, a styrene-isoprene-styrene block copolymer (SIS) rubber, a styrene-butadiene-styrene block copolymer (SBS) rubber, a styrene-ethylene-butylene-styrene block copolymer (SEBS) rubber, a styrene-ethylene-propylene-styrene block copolymer (SEPS) rubber, a styrene-ethylene-propylene block copolymer (SEP) rubber, a regenerated rubber, and modified materials thereof. Of these, a butyl rubber is especially preferable. That is, a butyl rubber-based pressure-sensitive adhesive is optimum as the pressure-sensitive adhesive.

As a method of forming the pressure-sensitive adhesive layer, known or customary forming methods can be employed, and a method of molding a pressure-sensitive adhesive into a sheet-like form by an extruder or a calender roll and sticking it onto a rubber-made sheet can be suitably employed. Also, a method of coating the pressure-sensitive adhesive on the surface of a rubber-made sheet as the substrate (coating method) and a method of coating the pressure-sensitive adhesive on a release film such as a release liner to form a pressure-sensitive adhesive layer and then transferring the pressure-sensitive adhesive layer onto a rubber-made sheet as the substrate (a transfer method) can be employed.

The thickness of each of the pressure-sensitive adhesive layers is not particularly limited. For example, the thickness can be chosen within the range of from 0.1 to 3 mm (preferably from 0.2 to 2 mm, and more preferably from 0.3 to 1 mm). Incidentally, the pressure-sensitive adhesive layers formed on the both surfaces of the rubber-made sheet may have the same thickness or may have a different thickness from each other.

### (Non-elongating release liner)

In the waterproof and airtight double-sided pressure-sensitive adhesive tape 1a as illustrated in Fig. 1A, the pressure-sensitive adhesive layer 3b is protected by the non-elongating release liner 5. The non-elongating release liner 5 is used as the need arises so that it can be arbitrarily provided. For example, in the case where the surface of one of the pressure-sensitive adhesive layers in the waterproof and airtight double-sided pressure-sensitive adhesive tape is protected by an elongating release liner having a release function on only one surface thereof, the surface of the other pressure-sensitive adhesive layer can be protected by a non-elongating release liner.

Incidentally, in using the waterproof and airtight double-sided pressure-sensitive adhesive tape, the non-elongating release liner can be utilized as a release liner in the side which is first released. Specifically, as described below, in the waterproof and airtight double-sided pressure-sensitive adhesive tape, in the case where the non-elongating release liner is used, the non-elongating release liner is first released to expose the pressure-sensitive adhesive surface; the waterproof and airtight double-sided pressure-sensitive adhesive tape is elongated in a state that the elongating release liner is superimposed and stuck on a prescribed surface; the elongating release liner is then released to expose the pressure-sensitive adhesive surface; and a covering material is then stuck and fixed on the pressure-sensitive adhesive surface. Thus, the waterproof and airtight double-sided pressure-sensitive adhesive tape can be utilized.

Such a non-elongating release liner (separator) is not particularly limited, and known release liners can be properly chosen and used.

### (Waterproof and airtight double-sided pressure-sensitive adhesive tape)

As described previously, the waterproof and airtight double-sided pressure-sensitive adhesive tape of the invention has a construction in which a pressure-sensitive adhesive layer is formed on the both surfaces of a rubber-made sheet as a substrate and the surface of at least one of the pressure-sensitive adhesive layers formed on the both surfaces of the substrate is protected by an elongating release liner. Accordingly, examples of the construction of the waterproof and airtight double-sided pressure-sensitive adhesive tape include (1) a construction in which an elongating release liner is superimposed on one of pressure-sensitive adhesive layers formed on the both surfaces of a substrate and a non-elongating release liner is superimposed on the other pressure-sensitive adhesive layer; (2) a construction in which the same of different elongating release liners are each superimposed on a pressure-sensitive adhesive layer formed on an either surface of a substrate; and (3) a construction in which an elongating release liner the both surfaces of which are a release surface is superimposed on one of pressure-sensitive adhesive layers formed on the both surfaces of a substrate and the resulting material is wound in a rolled form in a state that the surface of the other pressure-sensitive adhesive layer comes into contact with the exposed release surface in the elongating release liners the both surfaces of which are a release surface.

For example, the waterproof and airtight double-sided pressure-sensitive adhesive tape can be prepared by the following methods.
(1) A method in which additives such as a softener and a filler are blended in proper amounts in a rubber component such as a synthetic rubber and mixed by a mixing machine such as a mixing roll, a kneader, and a Banbury mixer to prepare a rubber composition; the rubber composition is molded into a sheet-like form by using a calender roll, an extruder, etc. to prepare a rubber-made sheet; a pressure-sensitive adhesive layer in a sheet-like form as obtained by extrusion molding by an extruder or molding by a calender roll is adhered onto the both surfaces of the rubber-made sheet; an elongating release liner only one surface of which is a release surface is superimposed on the surface of the pressure-sensitive adhesive layer formed on one surface of the rubber-made sheet; a non-elongating release liner is superimposed on the surface of the pressure-sensitive adhesive layer formed on the other surface of the rubber-made sheet; and the resulting material is wound in a rolled form as the need arises.
(2) A method in which additives such as a softener and a filler are blended in proper amounts in a rubber component such as a synthetic rubber and mixed by a mixing machine such as a mixing roll, a kneader, and a Banbury mixer to prepare a rubber composition; the rubber composition is molded into a sheet-like form by using a calender roll, an extruder, etc. to prepare a rubber-made sheet; a pressure-sensitive adhesive layer in a sheet-like form as obtained by extrusion molding by an extruder or molding by a calender roll is adhered onto the both surfaces of the rubber-made sheet; an elongating release liner the both surfaces of which are a release surface is superimposed on the surface of the pressure-sensitive adhesive layer formed on one surface of the rubber-made sheet; and the resulting material is then wound in a rolled form in a state that the exposed surface of the pressure-sensitive adhesive layer comes into contact with the exposed release surface of the elongating release liner.
(3) A method in which additives such as a softener and a filler are blended in proper amounts in a rubber component such as a synthetic rubber and mixed by a mixing machine such as a mixing roll, a kneader, and a Banbury mixer to prepare a rubber composition; the rubber composition is molded into a sheet-like form by using a calender roll, an extruder, etc. to prepare a rubber-made sheet; a pressure-sensitive adhesive layer in a sheet-like form as obtained by extrusion molding by an extruder or molding by a calender roll is superimposed on an elongating release liner only one surface of which is a release surface in a state that one surface of the pressure-sensitive adhesive layer comes into contact with the release surface, thereby preparing a pressure-sensitive adhesive layer one surface of which is protected by the elongating release liner; a pressure-sensitive adhesive layer in a sheet-like form as obtained by extrusion molding by an extruder or molding by a calender roll is superimposed on a non-elongating release liner in a state that one surface of the pressure-sensitive adhesive layer comes into contact with the release surface, thereby preparing a pressure-sensitive adhesive layer one surface of which is protected by the non-elongating release liner; the pressure-sensitive adhesive layer one surface of which is protected by the elongating release liner is adhered onto one surface of the rubber-made sheet; the pressure-sensitive adhesive layer one surface of which is protected by the non-elongating release liner is adhered onto the other surface of the rubber-made sheet; and the resulting material is wound in a rolled form as the need arises.
(4) A method in which additives such as a softener and a filler are blended in proper amounts in a rubber component such as a synthetic rubber and mixed by a mixing machine such as a mixing roll, a kneader, and a Banbury mixer to prepare a rubber composition; the rubber composition is molded into a sheet-like form by using a calender roll, an extruder, etc. to prepare a rubber-made sheet; a pressure-sensitive adhesive layer in a sheet-like form as obtained by extrusion molding by an extruder or molding by a calender roll is superimposed on an elongating release liner the both surfaces of which are a release surface in a state that one surface of the pressure-sensitive adhesive layer comes into contact with one of the release surfaces, thereby preparing a pressure-sensitive adhesive layer one surface of which is protected by the elongating release liner; a pressure-sensitive adhesive layer in a sheet-like form as obtained by extrusion molding by an extruder or molding by a calender roll is adhered onto one surface of the rubber-made sheet; the pressure-sensitive adhesive layer one surface of which is protected by the elongating release liner is adhered onto the other surface of the rubber-made sheet; and the resulting material is then wound in a rolled form in a state that the exposed surface of the pressure-sensitive adhesive layer comes into contact the exposed release surface of the elongating release liner.
(5) A method resulting from properly combining these methods.

Incidentally, the elongating release liner can be produced by a production process in response to the construction thereof as described previously. Specifically, in the case where the elongating release liner has a construction made of a film-like material having release properties against the pressure-sensitive adhesive layer and elongation properties (especially, in the case where the elongating release liner has a construction made of a polyolefin-based resin such as polyethylene and a mixture of polyethylene and polypropylene), it can be prepared by optionally adding proper amounts of additives such as a lubricant, a pigment, and a filler to a resin component which constructs the film-like material (for example, a polyolefin-based resin such as polyethylene and a mixture of polyethylene and polypropylene) and mixing by a mixing machine (for example, a mixing roll and a kneader) to prepare a resin composition and molding the resin composition in a film-like form by an extruder or a calender roll. Also, in the case where the elongating release liner has a construction in which a release treatment coating film layer or a non-self adhesive coating film layer is formed on at least one surface of a substrate having elongation properties, it can be prepared by coating a release treating agent which constructs a release treatment coating film layer or a coating film-forming composition which constructs a non-self adhesive coating film layer on at least one surface of the substrate having elongation properties, followed by drying or curing.

In the case where the pressure-sensitive adhesive layer is a pressure-sensitive adhesive layer made of a rubber-based pressure-sensitive adhesive, for example, a sheet-like pressure-sensitive adhesive layer can be formed by adding proper amounts of additives such as a softener, a filler, and a tackifier to a rubber component such as a butyl rubber and mixing by a mixing machine (for example, a mixing roll and a kneader) to prepare a rubber-based pressure-sensitive adhesive (especially, a butyl rubber-based pressure-sensitive adhesive) and then molding the rubber-based pressure-sensitive adhesive by an extruder or a calender roll. As a matter of course, as described previously, the pressure-sensitive adhesive layer can be formed by coating a pressure-sensitive adhesive composition in a solution state or in a molten state on a prescribed surface of a rubber-made sheet or coating it on a release film and then transferring onto a prescribed surface of a rubber-made sheet.

The waterproof and airtight double-sided pressure-sensitive adhesive tape of the invention has characteristics such that its elongation at the time of breakage (distance between two gage marks: 40 mm, drawing rate: 300 mm/min) is from 200 to 1,200 % in both the longitudinal direction (MD direction) and the cross direction (TD direction) and that its stress under 100 % elongation (distance between two gage marks: 40 mm, drawing rate: 50 mm/min) is from 10 to 100 N/cm² in both the longitudinal direction (MD direction) and the cross direction (TD direction).

In the waterproof and airtight double-sided pressure-sensitive adhesive tape, the elongation at the time of breakage (distance between two gage marks: 40 mm, drawing rate: 300 mm/min; hereinafter sometimes referred to as "elongation at break") in both the longitudinal direction (lengthwise direction or machine direction; so-called "MD direction") and the cross direction (transverse direction; so-called "TD direction") is from 200 to 1,200 %, and preferably from 300 to 1,200 % (especially from 500 to 1,200 %). Incidentally, when the elongation at break of the waterproof and airtight double-sided pressure-sensitive adhesive tape is less than 200 % in at least one direction of the MD direction and the TD direction, the elongation properties are lowered in sticking the waterproof and airtight double-sided pressure-sensitive adhesive tape, whereas when it exceeds 1,200 %, cutting is liable to occur in elongating and sticking the waterproof and airtight double-sided pressure-sensitive adhesive tape.

Incidentally, the elongation at break of the waterproof and airtight double-sided pressure-sensitive adhesive tape may be identical or different in both the MD direction and the TD direction. In many cases, the elongation at break in the TD direction is larger than that in the MD direction. For example, the elongation at break in the MD direction may be from 200 to 1,000 % (preferably from 300 to 900 %, and more preferably from 500 to 800 %), whereas the elongation at break in the TD direction may be from 300 to 1,200 % (preferably from 500 to 1,200 %, and more preferably from 700 to 1,200 %).

In the waterproof and airtight double-sided pressure-sensitive adhesive tape, the elongation at break can be determined in such a manner that a waterproof and airtight double-sided pressure-sensitive adhesive tape is punched into a specimen of a dumbbell shape No. 1 as defined in JIS K6251 (test width: 10 mm, distance between two gage marks: 40 mm) in each of the longitudinal direction and the cross direction of the waterproof and airtight double-sided pressure-sensitive adhesive tape; and according to JIS Z0237, by using a tensile tester the crosshead side of the specimen is drawn at a rate of 300 mm/min under conditions of a distance between two gage marks of the specimen of 40 mm and a width of the specimen (test width) of 10 mm, thereby measuring an elongation at the time when the specimen is broken.

In the waterproof and airtight double-sided pressure-sensitive adhesive tape, the stress under 100 % elongation (distance between two gage marks: 40 mm, drawing rate: 50 mm/min; hereinafter sometimes referred to as "100 % tensile deforming stress") in both the longitudinal direction (lengthwise or machine direction; so-called "MD direction") and the cross direction (transverse direction; so-called "TD direction") is from 10 to 100 N/cm², and preferably from 10 to 80 N/cm² (especially from 10 to 70 N/cm²). Incidentally, when the 100 % tensile deforming stress of the waterproof and airtight double-sided pressure-sensitive adhesive tape is less than 10 N/cm² in at least one direction of the MD direction and the TD direction, adhesiveness in sticking the waterproof and airtight double-sided pressure-sensitive adhesive tape is lowered, whereas when it exceeds 100 N/cm², the generation of wrinkle, cutting, peeling, etc. is liable to occur due to the deforming stress after elongating and sticking the waterproof and airtight double-sided pressure-sensitive adhesive tape.

Incidentally, the 100 % tensile deforming stress of the waterproof and airtight double-sided pressure-sensitive adhesive tape may be the same size or a different size in both the MD direction and the TD direction. With respect to the 100 % tensile deforming stress, in many cases, the 100 % tensile deforming stress in the MD direction is larger than that in the TD direction. For example, the 100 % tensile deforming stress in the MD direction may be from 12 to 100 N/cm² (preferably from 15 to 80 N/cm², and more preferably from 20 to 70 N/cm²), whereas the 100 % tensile deforming stress in the TD direction may be from 10 to 80 N/cm² (preferably from 10 to 50 N/cm², and more preferably from 10 to 30 N/cm²).

In the waterproof and airtight double-sided pressure-sensitive adhesive tape, the 100 % tensile deforming stress is a value calculated in such a manner that a waterproof and airtight double-sided pressure-sensitive adhesive tape is punched into a specimen of a dumbbell shape No. 1 as defined in JIS K6251 (test width: 10 mm, distance between two gage marks: 40 mm) in each of the longitudinal direction and the cross direction of the waterproof and airtight double-sided pressure-sensitive adhesive tape; according to JIS K6254, by using a tensile tester, the crosshead side of the specimen is drawn at a rate of 50 mm/min under conditions of a distance between two gage marks of the specimen of 40 mm and a width of the specimen (test width) of 10 mm, and at a point of time when the specimen is drawn with 100 %, the drawing is stopped, thereby measuring a load at this time; and the measured load value is divided by a cross-sectional area of the specimen [(thickness of specimen) x (width of specimen)] before drawing.

In the waterproof and airtight double-sided pressure-sensitive adhesive tape, the elongation at break and the 100 % tensile deforming stress can be adjusted by controlling physical properties (for example, elongation at break and 100 % tensile deforming stress) of the rubber-made sheet as a substrate and the physical properties of the elongating release liner. For example, when a rubber-made sheet having such characteristics that not only its elongation at the time of breakage (distance between two gage marks: 40 mm, drawing rate: 300 mm/min) is from 200 to 1,200 % in both the MD direction and the TD direction, but also its stress under 100 % elongation (distance between two gage marks: 40 mm, drawing rate: 50 mm/min) is from 10 to 100 N/cm² in both the MD direction and the TD direction is used as the rubber-made sheet as a substrate and an elongating release liner having such characteristics that not only its elongation at the time of breakage (distance between two gage marks: 40 mm, drawing rate: 300 mm/min) is from 200 to 1,200 % in both the MD direction and the TD direction, but also its stress under 100 % elongation (distance between two gage marks: 40 mm, drawing rate: 50 mm/min) is less than 10 N/cm² in both the MD direction and the TD direction is used as the elongating release liner, it is possible to prepare a waterproof and airtight double-sided pressure-sensitive adhesive tape having the foregoing elongation at break and 100 % tensile deforming stress.

Incidentally, the elongation at break and 100 % tensile deforming stress of the rubber-made sheet and the elongation at break and 100 % tensile deforming stress of the elongating release liner can be measured in the same manner as in the elongation at break and 100 % tensile deforming stress of the waterproof and airtight double-sided pressure-sensitive adhesive tape.

As described previously, even when the waterproof and airtight double-sided pressure-sensitive adhesive tape of the invention has a form of a double-sided pressure-sensitive adhesive tape, since an elongating release liner is used as the release liner for protecting the surface of at least one of the pressure-sensitive adhesive layers formed on the both surfaces of the rubber-made sheet as the substrate, it is possible to elongate the waterproof and airtight double-sided pressure-sensitive adhesive tape in a state that the surface of one of the pressure-sensitive adhesive layers is protected by the elongating release liner. For that reason, in sticking the pressure-sensitive adhesive tape by utilizing only one pressure-sensitive adhesive surface, it is not required to peel away the elongating release liner. For example, not only the waterproof and airtight double-sided pressure-sensitive adhesive tape can be folded in half and stuck such that the surfaces of elongating release liners come into contact with each other in a state that the surface of one of the pressure-sensitive adhesive layers is protected by the elongating release liner, but also it can be elongated and stuck and the sticking application workability is good. By making the waterproof and airtight double-sided pressure-sensitive adhesive tape have adequate elongation at break and 100 % tensile deforming stress, not only it is possible to stick the waterproof and airtight double-sided pressure-sensitive adhesive tape by properly drawing it, but also even when the waterproof and airtight pressure-sensitive adhesive tape is stuck in the elongated state, it is possible to effectively keep that state over a long period of time. Moreover, after the application, by peeling away the elongating release liner to expose the pressure-sensitive adhesive surface, it is possible to stick and fix a covering material of every kind such as sheets (for example, moisture-permeable waterproof sheets and moistureproof sheets), plate-like materials (for example, plywood boards, plastic plates, and metal plates), and three-dimensional processed articles having a prescribed shape (for example, plastic molding processed articles and metal-made processed articles) on the waterproof and airtight double-sided pressure-sensitive adhesive tape (in particular, the covering material can be fixed by temporal tacking), and it is possible to improve the applicability of the covering material. Thus, it becomes possible to keep excellent waterproof properties and airtightness over a long period of time.

Accordingly, even in the case where the waterproof and airtight double-sided pressure-sensitive adhesive tape is stuck to a curved shape or a three-dimensional shape such as openings and shaped portions (for example, external angles or convexes), since the waterproof and airtight double-sided pressure-sensitive adhesive tape can be folded in half or can be stuck while properly drawing, it can be easily stuck. Also, even when the waterproof and airtight double-sided pressure-sensitive adhesive tape is stuck in a drawn and elongated state, the generation of wrinkle, cutting, peeling, etc. due to a deforming stress is prevented so that the elongated state can be effectively kept. In addition, in superimposing and sticking the waterproof and airtight double-sided pressure-sensitive adhesive tape, since the pressure-sensitive adhesive layer is superimposed and stuck onto the surface of the pressure-sensitive adhesive layer, it can be stuck with excellent adhesive properties. Also, in an overlap of a joint part of the pressure-sensitive adhesive tape after sticking or an overlap of a terminal part, adhesive properties of the pressure-sensitive adhesive tape can be effectively ensured. For that reason, when the waterproof and airtight double-sided pressure-sensitive adhesive tape of the invention is used, even if the sticking site is a curved part or a three-dimensional part, the sticking work can be carried out simply. For example, by elongating the respective sites at an arbitrary elongation rate, the waterproof and airtight double-sided pressure-sensitive adhesive tape of the invention can be stuck beautifully in a cylindrical or fan form. Moreover, it is possible to stick and fix (especially fix by temporal tacking) a covering material on the waterproof and airtight double-sided pressure-sensitive adhesive tape. In addition, after sticking, it is possible to exhibit excellent waterproof properties and airtightness over a long period of time.

In this way, since the waterproof and airtight double-sided pressure-sensitive adhesive tape of the invention can be stuck in a state having excellent waterproof properties and airtightness, it can be suitably used as a double-sided pressure-sensitive adhesive tape having waterproof properties and/or airtightness in response to the utility. In particular, the waterproof and airtight double-sided pressure-sensitive adhesive tape of the invention can be stuck in a state having excellent waterproof properties and airtightness; a sticking application work of the double-sided pressure-sensitive adhesive tape is easy; and a covering material of every kind can be fixed on the double-sided pressure-sensitive adhesive tape. Accordingly, the waterproof and airtight pressure-sensitive adhesive tape of the invention can be utilized as a waterproof and airtight double-sided pressure-sensitive adhesive tape which is used for fixing a structure of dwelling house to a member or fixing members to each other. For example, it is useful as a waterproof and airtight double-sided pressure-sensitive adhesive tape to be used in fixing of openings such as ventilating openings of external wall penetration portions of exterior backings, surroundings of conduits, penetration portions of water feed/discharge pipes, ventilation fans, and surroundings of sash openings (for example, surroundings of arch type or cylindrical sash openings) ; shaped portions such as external angles, internal angles, and convexes (in particular, not only a site in which the sticking portion is planar but also a site in which the sticking portion has a curved shape or a three-dimensional shape), and so on. Accordingly, by using the waterproof and airtight double-sided pressure-sensitive adhesive tape of the invention, it is possible to enhance waterproof properties and airtightness of dwelling houses. Also, it is possible to prevent penetration of storm sewage into the inside of a dwelling house and to prevent dew condensation and corrosion in the inside of a dwelling house.

Incidentally, for example, in the sticking application of a pressure-sensitive adhesive tape in water feed/discharge pipes, there is a sticking application method of a waterproof and airtight double-sided pressure-sensitive adhesive tape in a portion where a body and a feed/discharge pipe intersect at right angles each other. In this case, there is usually employed an application method in which the double-sided pressure-sensitive adhesive tape is folded in a state that it comes into contact with the surface of the elongating release liner in a 1/2 width; the double-sided pressure-sensitive adhesive tape is wound up around the surrounding (circumference) of the feed/discharge pipe; and thereafter, the remaining 1/2-width portion is elongated and stuck to the body in a state that the surface of one of the pressure-sensitive adhesive layers is protected by the elongating release liner. At this time, in the case where an elongating release liner is not used but a general release liner is used, it is impossible to elongate and stick a waterproof and airtight double-sided pressure-sensitive adhesive tape in a state that the surface of one of the pressure-sensitive adhesive layers is protected by the release liner. Furthermore, when the waterproof and airtight double-sided pressure-sensitive adhesive tape is elongated in a state that the release liner is peeled away, since the both surfaces are a pressure-sensitive adhesive surface, it is difficult to elongate the waterproof and airtight double-sided pressure-sensitive adhesive tape. However, by using the waterproof and airtight double-sided pressure-sensitive adhesive tape of the invention, even when the elongating release liner is not peeled away, it is possible to stick the waterproof and airtight double-sided pressure-sensitive adhesive tape to a site having a curved shape or a three-dimensional shape with excellent sticking application workability.

According to the waterproof and airtight double-sided pres-sure-sensitive adhesive tape of the invention, even in the case of sticking to a site having a curved shape or a three-dimensional shape, its application workability during sticking is easy; and after the application, it is able to fix a covering material and to exhibit excellent waterproof properties and airtightness. For that reason, the waterproof and airtight double-sided pressure-sensitive adhesive tape of the invention is useful as a double-sided pressure-sensitive adhesive tape which is used for fixing a structure of dwelling house to a member or fixing members to each other and is able to prevent penetration of storm sewage into the inside of a dwelling house and to prevent dew condensation or corrosion in the inside of dwelling house over a long period of time.

The invention will be described below in more detail with reference to the following Examples, but it should not be construed that the invention is limited to these Examples.

### PREPARATION EXAMPLE 1 OF SUBSTRATE

50 parts by weight of a butyl rubber, 50 parts by weight of an ethylene-propylene-diene rubber (EPDM), 120 parts by weight of calcium carbonate heavy, 15 parts by weight of a process oil, and 10 parts by weight of carbon black were thrown into a mixer (Banbury mixer) and kneaded for 8 minutes. The kneaded mixture was then molded into a sheet-like form using a calender roll under a condition at a roll temperature of 110°C. There was thus prepared a rubber-made sheet having a thickness of 0.45 mm.

### PREPARATION EXAMPLE 1 OF PRESSURE-SENSITIVE ADHESIVE LAYER

100 parts by weight of a butyl rubber, 50 parts by weight of a tackifier, 100 parts by weight of calcium carbonate heavy, 30 parts by weight of carbon black, and 100 parts by weight of a softener were kneaded by a kneader to prepare a mixture, and the mixture was then introduced into an extruder and extrusion molded to prepare a sheet-like pressure-sensitive adhesive layer having a thickness of 0.8 mm.

### PREPARATION EXAMPLE 1 OF MOLD RELEASING TREATING AGENT

A commercially available thermosetting type silicone-based mold releasing treating agent (solvent type) was used.

### PREPARATION EXAMPLE 1 OF RELEASE LINER

On one surface of a polyethylene film having a thickness of 0.06 mm [having such characteristics that its elongation at break (elongation at the time of breakage) is 330 % in the longitudinal direction and 600 % in the cross direction, respectively], a prescribed amount of the mold releasing treating agent (thermosetting type silicone-based mold treating agent) as obtained in Preparation Example 1 of Mold Releasing Treating Agent was coated and dried at 100°C for 3 minutes to form a mold releasing treatment coating film layer having a thickness of about 0.3 µm. There was thus prepared a release liner (hereinafter sometimes referred to as "release liner A"). Accordingly, this release liner A has elongation properties.

### PREPARATION EXAMPLE 2 OF RELEASE LINER

A release liner (hereinafter sometimes referred to as "release liner B") was prepared in the same manner as in Preparation Example 1 of Release Liner, except that a polyethylene-polypropylene blend film formed of a mixed resin resulting from mixing polyethylene and polypropylene in a proportion of polyethylene/polypropylene of 7/3 in terms of a weight ratio and having a thickness of 0.035 mm and an elongation at break of 540 % in the longitudinal direction and 650 % in the cross direction, respectively was used in place of the polyethylene film having a thickness of 0.06 mm. Accordingly, this release liner B has elongation properties.

### PREPARATION EXAMPLE 3 OF RELEASE LINER

On one surface of the rubber-made sheet having a thickness of 0.45 mm (having such characteristics that its elongation at break is 670 % in the longitudinal direction and 930 % in the cross direction, respectively) as obtained in Preparation Example 1 of Substrate, a prescribed amount of the mold releasing treating agent as obtained in Preparation Example 1 of Mold Releasing Treating Agent was coated and dried or cured at 120°C for 3 minutes to form a mold releasing treatment coating film layer having a thickness of about 1 µm. There was thus prepared a release liner (hereinafter sometimes referred to as "release liner C"). Accordingly, this release liner C has elongation properties.

### PREPARATION EXAMPLE 4 OF RELEASE LINER

A knitted woven fabric (a trade name: 75D24F, manufactured by Nakai Knit Co., Ltd.; made of polyester fiber and woven by woolly yarns; having such characteristics that its elongation at break is 170 % in the longitudinal direction and 320 % in the cross direction, respectively) was dipped in a solution of the mold releasing treating agent as obtained in Preparation Example 1 of Mold Releasing Treating Agent. After taking out, the knitted woven fabric was dried and/or cured at 120°C for 3 minutes to prepare a release liner (hereinafter sometimes referred to as "release liner D"). Accordingly, this release liner D has elongation properties.

### PREPARATION EXAMPLE 5 OF RELEASE LINER

On the both surfaces of a substrate (thickness: 0.11 mm) resulting from laminating a polyethylene layer on the both surfaces of wood-free paper (basis weight: 50 g/m²) as a substrate, a prescribed amount of the mold releasing treating agent as obtained in Preparation Example 1 of Mold Releasing Treating Agent was coated and dried or cured at 100°C for 3 minutes to form a mold releasing treatment coating film layer having a thickness of 0.5 µm. There was thus prepared a release liner (hereinafter sometimes referred to as "release liner E"). Accordingly, this release liner E does not have elongation properties.

### EXAMPLE 1

The sheet-like pressure-sensitive adhesive layer (thickness: 0.8 mm) as obtained in Preparation Example 1 of Pressure-Sensitive Adhesive Layer was stuck onto one surface of the rubber-made sheet (thickness: 0.45 mm) as obtained in Preparation Example 1 of Substrate, and the release liner E (release liner not having elongation properties) as obtained in Preparation Example 5 of Release Liner was then superimposed on the foregoing pressure-sensitive adhesive layer. In addition, the sheet-like pressure-sensitive adhesive layer (thickness: 0.8 mm) as obtained in Preparation Example 1 of Pressure-Sensitive Adhesive Layer was stuck onto the other surface of the rubber-made sheet in the same manner, and the release liner A as obtained in Preparation Example 1 of Release Liner was then superimposed thereon, thereby obtaining a double-sided pressure-sensitive adhesive tape.

### EXAMPLE 2

A double-sided pressure-sensitive adhesive tape was obtained in the same manner as in Example 1, except for using the release liner B in place of the release liner A.

### EXAMPLE 3

A double-sided pressure-sensitive adhesive tape was obtained in the same manner as in Example 1, except for using the release liner C in place of the release liner A.

### EXAMPLE 4

A double-sided pressure-sensitive adhesive tape was obtained in the same manner as in Example 1, except for using the release liner D in place of the release liner A.

### COMPARATIVE EXAMPLE 1

The sheet-like pressure-sensitive adhesive layer (thickness: 0.8 mm) as obtained in Preparation Example 1 of Pressure-Sensitive Adhesive Layer was stuck onto one surface of the rubber-made sheet (thickness: 0.45 mm) as obtained in Preparation Example 1 of Substrate, and the release liner E (release liner not having elongation properties) as obtained in Preparation Example 5 of Release Liner was then superimposed on the foregoing pressure-sensitive adhesive layer. In addition, the sheet-like pressure-sensitive adhesive layer (thickness: 0.8 mm) as obtained in Preparation Example 1 of Pressure-Sensitive Adhesive Layer was stuck onto the other surface of the rubber-made sheet in the same manner, and the resulting material was then wound in a rolled form in a state that the exposed surface of the pressure-sensitive adhesive layer came into contact with the exposed mold releasing treatment coating film of the release liner E, thereby obtaining a double-sided pressure-sensitive adhesive tape.

Incidentally, the elongation at break was measured by the following measurement method.

### (Measurement method of elongation at break)

A film-like material is punched into a specimen of a dumbbell shape No. 1 as defined in JIS K6251 (test width: 10 mm, distance between two gage marks: 40 mm) in each of the longitudinal direction (MD direction) and the cross direction (TD direction) of the specimen; and by using a tensile tester, the crosshead side of the specimen is drawn at a rate of 300 mm/min under conditions of a distance between two gage marks of the specimen of 40 mm and a width of the specimen of 10 mm, thereby measuring an elongation (%) at the time when the specimen is broken. This measured value is defined as an elongation at break.

### (Evaluation)

With respect to the respective double-sided pressure-sensitive adhesive tapes as obtained in Examples 1 to 4 and Comparative Example 1, after peeling away the release liner not having elongation properties (namely, the release liner E) in the double-sided pressure-sensitive adhesive tapes according to Examples 1 to 4, or after rewinding in the double-sided pressure-sensitive adhesive tape according to Comparative Example 1, each of the double-sided pressure-sensitive adhesive tapes was elongated in a state that the release liner (the release liners A to D having elongation properties in the double-sided pressure-sensitive adhesive tapes according to Examples 1 to 4 and the release liner E not having elongation properties in the double-sided pressure-sensitive adhesive tape according to Comparative Example 1) was superimposed on one of the pressure-sensitive adhesive layers. As a result, each of the double-sided pressure-sensitive adhesive tapes according to Examples 1 to 4 could be elongated until the elongation reached about 100 % in a state that the release liner was stuck on the surface of the pressure-sensitive adhesive layer, whereas the double-sided pressure-sensitive adhesive tape according to Comparative Example 1 could not be elongated in a state that the release liner was stuck on the surface of the pressure-sensitive adhesive.

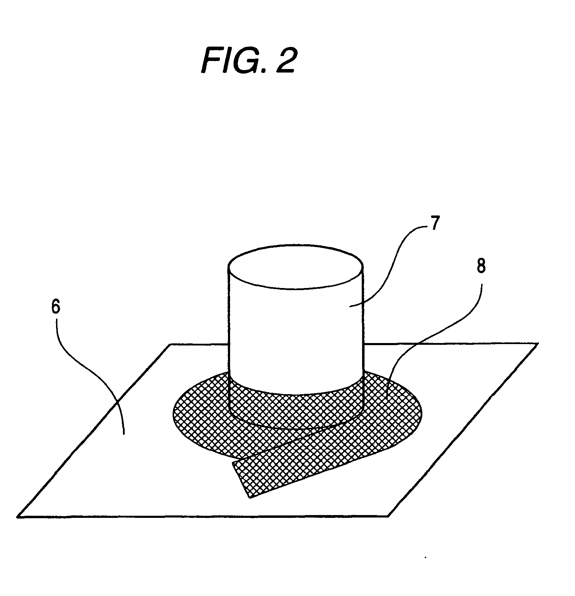

Each of the double-sided pressure-sensitive adhesive tapes according to Examples 1 to 4 was cut into a width of 50 mm and a length of 250 mm to prepare a double-sided pressure-sensitive adhesive tape-stuck specimen. As illustrated in Fig. 2, the foregoing double-sided pressure-sensitive adhesive tape-stuck specimen was evaluated with respect to the sticking application properties by applying the circumference of a shaped portion of a water feed/discharge pipe (a cylindrical water feed/discharge pipe having an external diameter of 60 mmφ) adhered onto the surface of a body made of a plywood board in the vertically standing state against the surface of the foregoing plywood board (i.e., a joint part between the body and the water feed/discharge pipe and its circumference) in the following application method under a condition at a temperature of 23 ± 2 °C and at a humidity of 50 ± 5 % RH. As a result, the application works could be easily carried out.

### (Application method)

First of all, the double-sided pressure-sensitive adhesive tape-stuck specimen is folded in half in a state that the surfaces of the release liners having elongation properties (namely, the release liners A to D) are positioned inward while being faced at each other and that the surface of the pressure-sensitive adhesive layer which is protected by the release liner not having elongation properties (namely, the release liner E) is positioned outward; and one of the release liners not having elongation properties (namely, the release liner E) which are positioned on the both outer sides is peeled away, thereby exposing the pressure-sensitive adhesive surface. Then, the double-sided pressure-sensitive adhesive tape-stuck specimen is stuck onto the outer circumference of a feed/discharge pipe in a state that the exposed pressure-sensitive adhesive surface comes into contact with the outer circumference of the feed/discharge pipe. Thereafter, the remaining release liner not having elongation properties is peeled away to expose the remaining pressure-sensitive adhesive surface, and the double-sided pressure-sensitive adhesive tape-stuck specimen in the portion of this exposed pressure-sensitive adhesive surface is stuck onto the body while being elongated as illustrated in Fig. 2.

Fig. 2 is a schematic view to show a method of subjecting a double-sided pressure-sensitive adhesive tape to sticking to the circumference of a shaped portion by a method of evaluating sticking application properties in the Examples. In Fig. 2, 6 denotes a body (plywood board); 7 denotes a water feed/discharge pipe; and 8 denotes a double-sided pressure-sensitive adhesive tape. In Fig. 2, the water feed/discharge pipe 7 is adhered onto the surface of the body 6 made of a plywood board in the vertically standing state against the surface of the foregoing body (plywood board) 6. The foregoing water feed/discharge pipe 7 has a cylindrical shape having an external diameter of 60 mmφ. The double-sided pressure-sensitive adhesive tape 8 is applied in such a shape portion and its surrounding (a joint part between the body 6 and the water feed/discharge pipe 7 and its circumference). Incidentally, the surface in the double-sided pressure-sensitive adhesive tape 8 after the application becomes a surface of the release liner having elongation properties.

## Claims

1. A waterproof and airtight double-sided pressure-sensitive adhesive tape comprising a substrate and a pressure-sensitive adhesive layer on the both surfaces thereof, wherein the substrate is a rubber-made sheet; and the surface of at least one of the pressure-sensitive adhesive layers is protected by a release liner having elongation properties,
wherein the rubber-made sheet as the substrate has an elongation at the time of breakage (distance between two gage marks: 40 mm, drawing rate: 300 mm/min) of from 200 to 1,200 % in both the longitudinal direction and the cross direction and a stress under 100 % elongation (distance between two gage marks 40 mm, drawing rate: 50 mm/min) of from 10 to 100 N/cm² in both the longitudinal direction and the cross direction, wherein the release liner having elongation properties has an elongation at the time of breakage (distance between two gage marks: 40 mm, drawing rate: 300 mm/min) of from 150 to 1,200 % in both the longitudinal direction and the cross direction.

2. The waterproof and airtight double-sided pressure-sensitive adhesive tape according to claim 1, wherein the release liner having elongation properties is a release liner made of a film-like material having release properties against the pressure-sensitive adhesive layer and elongation properties or a release liner having a construction in which a release treatment coating film layer or a coating film layer having non-self adhesive properties is formed on at least one surface of a substrate having elongation properties.

3. The waterproof and airtight double-sided pressure-sensitive adhesive tape according to claim 2, wherein the release treatment coating film layer is formed of a silicone-based release treating agent.

4. The waterproof and airtight double-sided pressure-sensitive adhesive tape according to claim 2, wherein the coating film layer having non-self adhesive properties is formed of a coating film-forming composition containing an acrylic polymer or a long chain alkyl-based compound.

5. The waterproof and airtight double-sided pressure-sensitive adhesive tape according to claim 1, wherein the rubber-made sheet is constructed of a rubber composition containing a synthetic rubber as the major component.

6. The waterproof and airtight double-sided pressure-sensitive adhesive tape according to claim 5, wherein the synthetic rubber of the rubber-made sheet is at least one synthetic rubber selected from a butyl rubber, an ethylene-propylene rubber and an ethylene-propylene-diene rubber.

## Patentansprüche

1. Wasserfestes und luftundurchlässiges, doppelseitiges, druckempfindliches Klebeband, umfassend ein Substrat und eine druckempfindliche Klebeschicht auf den beiden Oberflächen davon, wobei das Substrat eine aus Gummi hergestellte Folie ist; und die Oberfläche von mindestens einer der druckempfindlichen Klebeschichten mit einer Trennlage geschützt ist, die Dehnungseigenschaften besitzt,
wobei die aus Gummi hergestellte Folie als das Substrat eine Dehnung zum Zeitpunkt des Reißens (Abstand zwischen zwei Endmarken: 40 mm, Ziehgeschwindigkeit: 300 mm/min) von 200 bis 1.200% sowohl in der Längsrichtung als auch in der Querrichtung, sowie eine Spannung bei 100% Dehnung (Abstand zwischen zwei Endmarken: 40 mm, Ziehgeschwindigkeit: 50 mm/min) von 10 bis 100 N/cm² sowohl in der Längsrichtung als auch in der Querrichtung besitzt, wobei die Trennlage, die Dehnungseigenschaften besitzt, eine Dehnung zum Zeitpunkt des Reißens (Abstand zwischen zwei Endmarken: 40 mm, Ziehgeschwindigkeit: 300 mm/min) von 150 bis 1.200% sowohl in der Längsrichtung als auch in der Querrichtung besitzt.

2. Das wasserfeste und luftundurchlässige, doppelseitige, druckempfindliche Klebeband gemäß Anspruch 1, wobei die Trennlage, die Dehnungseigenschaften besitzt, eine Trennlage ist, die aus einem filmartigen Material hergestellt ist, das Trenneigenschaften gegenüber der druckempfindlichen Klebeschicht sowie Dehnungseigenschaften besitzt, oder eine Trennlage ist, die einen Aufbau besitzt, bei dem eine Beschichtungsfilmschicht zur Trennbehandlung oder eine Beschichtungsfilmschicht, die nicht selbstklebende Eigenschaften besitzt, auf mindestens einer Oberfläche eines Substrats, das Dehnungseigenschaften besitzt, gebildet ist.

3. Das wasserfeste und luftundurchlässige, doppelseitige, druckempfindliche Klebeband gemäß Anspruch 2, wobei die Beschichtungsfilmschicht zur Trennbehandlung aus einem silikonbasierten Trennbehandlungsmittel gebildet ist.

4. Das wasserfeste und luftundurchlässige, doppelseitige, druckempfindliche Klebeband gemäß Anspruch 2, wobei die Beschichtungsfilmschicht, die nicht selbstklebende Eigenschaften besitzt, aus einer Zusammensetzung, die den Beschichtungsfilm bildet, gebildet ist, die ein Acrylpolymer oder eine Verbindung enthält, die auf langen Alkylketten basiert.

5. Das wasserfeste und luftundurchlässige, doppelseitige, druckempfindliche Klebeband gemäß Anspruch 1, wobei die aus Gummi hergestellte Folie aus einer Gummizusammensetzung aufgebaut ist, die einen synthetischen Gummi als die Hauptkomponente enthält.

6. Das wasserfeste und luftundurchlässige, doppelseitige, druckempfindliche Klebeband gemäß Anspruch 5, wobei der synthetische Gummi der aus Gummi hergestellten Folie mindestens ein synthetischer Gummi ist, der aus einem Butylgummi, einem Ethylen-Propylengummi oder einem Ethylen-Propylen-Diengummi ausgewählt ist.

## Revendications

1. Bande adhésive sensible à la pression double face imperméable à l'eau et étanche à l'air comprenant un substrat et une couche adhésive sensible à la pression sur ses deux surfaces, dans laquelle le substrat est une feuille en caoutchouc ; et la surface d'au moins une des couches adhésives sensibles à la pression est protégée par un liner de séparation présentant des propriétés d'allongement,
dans laquelle la feuille en caoutchouc en tant que substrat présente un allongement à la rupture (distance entre deux marques d'étalonnage : 40 mm, vitesse d'étirage : 300 mm/min) de 200 à 1 200 % à la fois dans la direction longitudinale et dans la direction transversale et une contrainte sous 100 % d'allongement (distance entre deux marques d'étalonnage : 40 mm, vitesse d'étirage : 50 mm/min) de 10 à 100 N/cm² à la fois dans la direction longitudinale et dans la direction transversale, dans laquelle le liner de séparation présentant des propriétés d'allongement présente un allongement à la rupture (distance entre deux marques d'étalonnage : 40 mm, vitesse d'étirage : 300 mm/min) de 150 à 1 200 % à la fois dans la direction longitudinale et dans la direction transversale.

2. Bande adhésive sensible à la pression double face imperméable à l'eau et étanche à l'air selon la revendication 1, dans laquelle le liner de séparation présentant des propriétés d'allongement est un liner de séparation constitué d'un matériau semblable à un film présentant des propriétés de séparation par rapport à la couche adhésive sensible à la pression et des propriétés d'allongement ou un liner de séparation présentant une construction dans laquelle une couche de film de revêtement de traitement de séparation ou une couche de film de revêtement présentant des propriétés non autoadhésives est formée sur au moins une surface d'un substrat présentant des propriétés d'allongement.

3. Bande adhésive sensible à la pression double face imperméable à l'eau et étanche à l'air selon la revendication 2, dans laquelle la couche de film de revêtement de traitement de séparation est constituée d'un agent de traitement de séparation à base de silicone.

4. Bande adhésive sensible à la pression double face imperméable à l'eau et étanche à l'air selon la revendication 2, dans laquelle la couche de film de revêtement présentant des propriétés non autoadhésives est constituée d'une composition formant un film de revêtement contenant un polymère acrylique ou un composé à base d'alkyle à chaîne longue.

5. Bande adhésive sensible à la pression double face imperméable à l'eau et étanche à l'air selon la revendication 1, dans laquelle la feuille en caoutchouc est construite à partir d'une composition de caoutchouc contenant un caoutchouc synthétique comme constituant principal.

6. Bande adhésive sensible à la pression double face imperméable à l'eau et étanche à l'air selon la revendication 5, dans laquelle le caoutchouc synthétique de la feuille en caoutchouc est au moins un caoutchouc synthétique choisi parmi un caoutchouc de butyle, un caoutchouc d'éthylène-propylène et un caoutchouc d'éthylène-propylène-diène.
